# EUROPÄISCHE PATENTANMELDUNG

(11) **EP 4 641 812 A1**
(43) Veröffentlichungstag der Anmeldung: **29.10.2025**
(21) Anmeldenummer: 24172590.2
(22) Anmeldetag: 25.04.2024
(51) Int. Cl.: H01M 50/533, H01M 50/536, H01M 50/54, H01M 50/557, H01M 10/0585, H01M 50/548

(54) **ELEKTRODENANORDNUNG MIT LOKAL BIEGBAREN ABLEITERN**

(71) Anmelder: Cellforce Group GmbH, 72138 Kirchentellinsfurt (DE)
(72) Erfinder: Gräf, Jürgen, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft eine Elektrodenanordnung, insbesondere für eine Batteriezelle, aufweisend mindestens ein Elektrodenpaket mit einer Vielzahl von Anodenfolien und Kathodenfolien, welche durch Separatorfolien voneinander getrennt sind, wobei die Anodenfolien endseitig Anodenableiter und die Kathodenfolien endseitig Kathodenableiter aufweisen, welche entlang einer Längenrichtung an gegenüberliegenden Seiten des Elektrodenpakets hinausragen, wobei die Anodenableiter an einer ersten Seite hinausragen und an mindestens zwei durch mindestens einen Biegeabschnitt voneinander beabstandeten Verbindungsabschnitten miteinander verbunden sind und/oder wobei die Kathodenableiter an einer zweiten Seite des Elektrodenpakets hinausragen und an mindestens zwei durch mindestens einen Biegeabschnitt voneinander beabstandeten Verbindungsabschnitten miteinander verbunden sind. Des Weiteren betrifft die Erfindung eine Batteriezelle und ein Verfahren zum Herstellen von Batteriezellen.

## Beschreibung

Die Erfindung betrifft eine Elektrodenanordnung, insbesondere für eine Batteriezelle, aufweisend mindestens ein Elektrodenpaket mit einer Vielzahl von Anodenfolien und Kathodenfolien, welche durch Separatorfolien voneinander getrennt sind, wobei die Anodenfolien endseitig Anodenableiter und die Kathodenfolien endseitig Kathodenableiter aufweisen, welche entlang einer Längenrichtung an gegenüberliegenden Seiten des Elektrodenpakets hinausragen. Weiteren betrifft die Erfindung eine Batteriezelle mit mindestens einer Elektrodenanordnung und ein Verfahren zum Herstellen von Batteriezellen.

Neben den sogenannten Pouch-Zellen mit flexiblen bzw. folienartigen Zellgehäusen sind auch Hardcase-Zellen bekannt. Derartige Batteriezellen besitzen ein starres, metallisches Gehäuse und können geometrisch beispielsweise in runder oder prismatischer Form ausgestaltet sein. Die jeweiligen Batteriepole sind an den sogenannten Terminals der Batteriezelle in erhabener Form auf der Außenseite positioniert, um eine vereinfachte, elektrische Anbindung der Batteriezellen zu ermöglichen. Üblicherweise sind die Batteriepole bzw. Terminals in einem Zelldeckel der Batteriezelle integriert, der ein Innenvolumen des Zellgehäuses verschließt.

Der Zelldeckel der Batteriezelle ist regulär aus einem Metall, wie beispielsweise Aluminium, Edelstahl oder Stahl mit einer Nickelbeschichtung, gefertigt. Die Terminals der Batteriepole werden regulär elektrisch gegenüber dem Zelldeckel isoliert angeordnet. Hierbei erfolgt eine elektrisch leitende Durchführung durch den Zelldeckel hindurch, um entsprechende Kollektoren zu kontaktieren, die an einer dem Innenvolumen des Zellgehäuses zugewandten Seite des Zelldeckels positioniert sind. Die Terminals bilden somit einen außenseitigen elektrischen Anschluss aus und sind elektrisch leitend mit den zum Innenvolumen des Zellgehäuses zugewandten Kollektoren verbunden.

Im Innenvolumen des Zellgehäuses werden bei Batteriezellen, wie beispielsweise Lithium-Ionen-Batterien, Elektrodenpakete angeordnet, die aus einander abwechselnden, Lagen bzw. Schichten von Anoden, Kathoden und Separatoren bestehen. Derartige Anodenfolien und Kathodenfolien können durch Wickeln oder Stapeln geformt und in dem Innenvolumen des Zellengehäuses für den endgültigen Gebrauch durch Kunden positioniert werden. Die jeweiligen Anodenfolien und Kathodenfolien müssen im Rahmen der Batteriezellenherstellung mit den Batteriepolen verbunden werden. Hierzu werden Anodenableiter und Kathodenableiter als Verbindungsleitungen zwischen den Batteriepolen und den Anodenfolien bzw. Kathodenfolien eingesetzt. Die Anodenableiter und Kathodenableiter sind üblicherweise als unbeschichtete Enden der Anodenfolien und Kathodenfolien ausgebildet und werden endseitig mit den entsprechenden Kollektoren verschweißt. Dabei werden die Anodenableiter und Kathodenableiter auf der kompletten Fläche zu massiven Fähnchenpaketen zusammengefasst bzw. geschweißt.

Zur Sicherstellung des Werkzeugzugangs, beispielsweise für das Laserschweißen mit Niederhalter oder Sonotrode und Amboss bei der Ultraschallschweißung, muss das Zusammenfassen der Anodenableiter und der Kathodenableiter regulär außerhalb des Zellgehäuses erfolgen. Da die Fähnchenpakete zunächst parallel zur Grundfläche des Elektrodenstapels liegen und die Kollektoren aus Bauraumgründen in der Regel senkrecht hierzu ausgerichtet sind, müssen beim Zusammenbau der Batteriezelle die Fähnchenpakete gefaltet werden. Aufgrund der vollflächigen Verschweißung der Fähnchenpakete bilden diese einen technisch schwer biegbaren Massivkörper aus. Neben einer Einschränkung des minimalen Biegeradius ist eine Begrenzung der Kräfte auf den Elektrodenstapel durch ein Abstützen des Elektrodenstapels erforderlich. Diese Maßnahmen erfordern eine Verlängerung der Anodenableiter und Kathodenableiter, die in einer Gewichtssteigerung und Vergrößerung des erforderlichen Innenvolumens des Zellgehäuses resultieren kann. Darüber hinaus kann die Verlängerung der Anodenableiter und Kathodenableiter zu einem höheren ohmschen Widerstand führen.

Die vorliegende Erfindung hat daher die Aufgabe, eine Elektrodenanordnung und eine Batteriezelle einer derartigen Elektrodenanordnung zu schaffen, die Anodenableiter und Kathodenableiter mit einer erhöhten Flexibilität aufweisen. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Elektrodenanordnung, insbesondere für Batteriezellen, bereitgestellt. Die Elektrodenanordnung weist mindestens ein Elektrodenpaket mit einer Vielzahl von Anodenfolien und Kathodenfolien auf. Die Anodenfolien und Kathodenfolien sind durch Separatorfolien voneinander getrennt. Die Anodenfolien weisen endseitig Anodenableiter und die Kathodenfolien endseitig Kathodenableiter auf, welche entlang einer Längenrichtung an gegenüberliegenden Seiten des Elektrodenpakets hinausragen. Dabei können die Anodenableiter und die Kathodenableiter eine von den Anodenfolien und Kathodenfolien abweichende Grundform und Querschnittsform aufweisen oder in Form einer Verlängerung ohne Änderung der Querschnittsform ausgestaltet sein.

Die Anodenableiter ragen an einer ersten Seite aus dem Elektrodenpaket hinaus und sind an mindestens zwei durch mindestens einen Biegeabschnitt voneinander beabstandeten Verbindungsabschnitten miteinander verbunden. Alternativ oder zusätzlich ragen die Kathodenableiter an einer zweiten Seite des Elektrodenpakets hinaus und sind an mindestens zwei durch mindestens einen Biegeabschnitt voneinander beabstandeten Verbindungsabschnitten miteinander verbunden.

Gemäß einem weiteren Aspekt der Erfindung wird eine Batteriezelle bereitgestellt. Die Batteriezelle weist ein Zellgehäuse auf, welches an mindestens einer Seite durch einen Zelldeckel verschlossen ist. Vorteilhafterweise kann der mindestens eine Zelldeckel eine oder mehrere Öffnungen des Zellgehäuses fluiddicht verschließen. Der Zelldeckel weist mindestens einen innenseitig angeordneten Kollektor und mindestens ein außenseitig angeordnetes Terminal auf. Der mindestens eine Kollektor und das mindestens eine Terminal sind durch den Zelldeckel hindurch elektrisch leitend miteinander verbunden.

Die Batteriezelle weist mindestens eine im Zellgehäuse angeordnete, erfindungsgemäße Elektrodenanordnung auf. Bevorzugterweise sind Anodenableiter und/oder Kathodenableiter der mindestens einen Elektrodenanordnung elektrisch leitend mit zumindest einem Kollektor des mindestens einen Zelldeckels verbunden.

Durch die erfindungsgemäße Elektrodenanordnung werden die jeweiligen Fähnchenpakete bzw. Anodenableiter und Kathodenableiter nur partiell bzw. abschnittsweise und nicht vollständig miteinander verbunden. An den voraussichtlichen oder geplanten Biegeabschnitten der Anodenableiter und/oder Kathodenableiter werden diese nicht miteinander geheftet oder verbunden, sodass die Biegeabschnitte aus einer Vielzahl von flexiblen Einzellagen der Anodenableiter und/oder Kathodenableiter bestehen können. Durch diese Maßnahme wird eine technisch einfache Lösung zum Biegen von Fähnchenpaketen, auch bei Elektrodenpaketen von leistungsstärkeren Batteriezellen, erzielt.

Die Faltung der Anodenableiter und Kathodenableiter kann mit einer reduzierten Krafteinwirkung und auf engem Radius erfolgen, wodurch die Energiedichte der Batteriezelle erhöht werden kann. Aufgrund der Reduzierung der nötigen Länge der Anodenableiter und Kathodenableiter, bedingt durch die Minimierung des Biegeradius, kann auch eine Gewichtseinsparung und eine Verringerung des ohmschen Widerstands erzielt werden

Je nach Ausgestaltung können die Verbindungsabschnitte und Biegeabschnitte ausschließlich in die Anodenableiter, ausschließlich in die Kathodenableiter oder in die Anodenableiter und die Kathodenableiter eingebracht werden. Entsprechend können ein oder mehrere Biegeabschnitte vorgesehen sein. Dabei kann jeder Biegeabschnitt zwischen zwei Verbindungsabschnitten definiert sein. Bei zwei Biegeabschnitten können somit drei Verbindungsabschnitte ausgebildet werden. Alternativ können auch mehrere Biegeabschnitte zwischen zwei Verbindungsabschnitten ausgebildet werden.

Die Biegeabschnitte der Anodenableiter und/oder Kathodenableiter sind gemäß einer Ausführungsform an mindestens einem Biegeabschnitt entlang mindestens einer Raumrichtung quer zur Längenrichtung elastisch biegbar und/oder plastisch faltbar. Bevorzugterweise sind alle oder zumindest ein Teil aller Anodenableiter und/oder Kathodenableiter an mindestens einem zum Biegeabschnitt benachbart angeordneten Verbindungsabschnitt stoffschlüssig miteinander verbunden. Beispielsweise kann der Verbindungsabschnitt quer zur Längenrichtung, beispielsweise in Streifenform, in die Anodenableiter und/oder Kathodenableiter eingebracht sein, sodass die Anodenableiter und/oder Kathodenableiter entlang des Verbindungsabschnitts stoffschlüssig miteinander verbunden sind. Parallel zu der Ausdehnung des Verbindungsabschnitts können die Anodenableiter und/oder Kathodenableiter entlang des Biegeabschnitts gebogen oder gefaltet werden.

Entlang des Biegeabschnitts können die in Form von Einzellagen vorliegenden Anodenableiter und/oder Kathodenableiter elastisch verformbar gebogen werden oder plastisch verformbar gefaltet werden.

Beispielsweise kann eine in Längenrichtung schmal ausgestaltete Heftung der Anodenableiter und/oder Kathodenableiter unmittelbar hinter einer 90°-Biegung entlang eines Biegeabschnitts eingebracht werden, um auch Auswirkung der Biegung auf das Elektrodenpaket zu reduzieren bzw. eine mechanische Entkopplung zwischen dem Biegeabschnitt und dem Elektrodenpaket auszubilden.

Während der Biegung entlang eines Biegeabschnitts der Verbindungsabschnitt, welcher zwischen dem Biegeabschnitt und dem Elektrodenpaket angeordnet ist, als ein Halteabschnitt genutzt werden, um eine mechanische Beanspruchung des Elektrodenpakets zu minimieren. Somit kann ein unbeabsichtigtes Hinausziehen der Anodenfolien und Kathodenfolien beim Falten aus dem Elektrodenstapel unterbunden werden.

Nach einer weiteren Ausführungsform ist der mindestens eine Verbindungsabschnitt gerade oder entlang zumindest einer Raumrichtung verformt ausgestaltet. Durch diese Maßnahme kann ein Verbindungsabschnitt technisch besonders einfach ausgestaltet sein oder unterstützend bei einer Biegung der Anodenableiter und/oder Kathodenableiter wirken.

Gemäß einem weiteren Ausführungsbeispiel ist der Verbindungsabschnitt in einem Winkel quer zur Längenrichtung verformt, insbesondere gebogen oder geknickt, ausgestaltet. Hierdurch kann neben der Biegung der Anodenableiter und/oder Kathodenableiter entlang des Biegeabschnitts auch eine Richtungsänderung der Anodenableiter und/oder Kathodenableiter an den Verbindungsabschnitten realisiert werden, um eine noch kompaktere Form des Zellgehäuses zu ermöglichen.

Die Verbindungsabschnitte können besonders präzise in die Anodenableiter und/oder Kathodenableiter eingebracht werden, wenn diese entlang einer Breitenrichtung randseitig oder mittig zusammengefasst und durch einen Verbindungsabschnitt bereichsweise miteinander verbunden sind.

Bei einem Biegen der Anodenableiter und/oder Kathodenableiter können besonders kleine Biegeradien realisiert werden, wenn entlang des mindestens einen Biegeabschnitts die Anodenableiter und/oder Kathodenableiter in Form von voneinander unabhängig beweglichen Einzellagen ausgestaltet sind.

Die Biegeabschnitte der Anodenableiter und/oder Kathodenableiter können für bestimmte Biegerichtungen angepasst werden, wenn die als Einzellagen ausgestalteten Anodenableiter und/oder Kathodenableiter des mindestens einen Biegeabschnitts eine gleiche oder voneinander unterschiedliche Länge aufweisen. Bei einer Anpassung der jeweiligen Längen der Anodenableiter und/oder Kathodenableiter entlang des Biegeabschnitts können die bei einer Biegung außenliegenden Einzellagen länger ausgebildet sein, um ein sogenanntes Ausbeulen oder außenseitiges Abstehen der jeweiligen Einzellagen der Anodenableiter und/oder Kathodenableiter zu reduzieren und somit einen geringeren Bauraumbedarf für die gefalteten oder gebogenen Anodenableiter und/oder Kathodenableiter zu erzielen.

Nach einer weiteren Ausführungsform sind die als Einzellagen ausgestalteten Anodenableiter und/oder Kathodenableiter entlang des Biegeabschnitts einfach oder mehrfach biegbar und/oder verformbar. Somit können in Abhängigkeit von einer Länge des Biegeabschnitts entlang der Längenrichtung mehrere Biegungen der Einzellagen realisiert werden. Diese Maßnahme ermöglicht eine besonders dynamische Anpassung der Anodenableiter und/oder Kathodenableiter an die Platzverhältnisse im Zellgehäuse

Die Anodenableiter und/oder Kathodenableiter können besonders kompakt gefaltet oder gebogen werden, wenn die als Einzellagen ausgestalteten Anodenableiter und/oder Kathodenableiter entlang eines Biegeabschnitts in gegensätzliche Richtungen, insbesondere S-förmig oder Z-förmig, gebogen und/oder verformt sind. Hierdurch können vorteilhafterweise zwei Biegungen bzw. zwei Biegeabschnitte entlang der Längenrichtung zwischen zwei Verbindungsabschnitten definiert werden.

Die Biegung oder Verformung der Anodenableiter und/oder Kathodenableiter entlang der Biegeabschnitte kann nach dem Verbinden der Anodenableiter und/oder Kathodenableiter mit entsprechenden Kollektoren zeitgleich mit einem Verschließen des Zellgehäuses durch einen Zelldeckel erfolgen.

Ein Bereich der Anodenableiter und/oder Kathodenableiter zwischen zwei Biegestellen bzw. Biegeabschnitten kann ebenfalls durch einen in Längenrichtung kurz ausgestalteten Verbindungsabschnitt geheftet werden, um ein Auffächern der Einzellagen bei einem Biegen der Anodenableiter und/oder Kathodenableiter zu verhindern. Durch diese Maßnahme können die Biegeabschnitte besonders definiert und somit lokal in ihren Abmessungen begrenzt werden.

Gemäß einem weiteren Ausführungsbeispiel sind die als Einzellagen ausgestalteten Anodenableiter und/oder Kathodenableiter entlang des Biegeabschnitts derartig in gegensätzliche Richtungen gebogen, dass aufgrund von einer Biegung resultierende Bogenlängenänderungen von Einzellagen sich durch mindestens eine zweite Biegung ausgleichen. Die Einwirkung auf die jeweiligen Einzellagen durch Heftung, Schweißung und/oder Faltung kann vorteilhafterweise derart erfolgen, dass die Einzelfähnchen bzw. Einzellagen nicht gestreckt oder gestaucht werden müssen und auch keine Auffächerung der Pakete von Anodenableitern und/oder Kathodenableitern im nicht gehefteten Bereich erfolgt. Dies kann beispielsweise dadurch erreicht werden, dass das Paket von Anodenableitern und/oder Kathodenableitern an zwei Stellen gefaltet wird, wobei an der ersten Stelle eine Biegung im Uhrzeigersinn und an der zweiten Stelle eine Biegung mit gleichem Winkel entgegen dem Uhrzeigersinn erfolgt, wodurch sich die Bogenlängenänderungen beim Biegen wechselseitig genau aufheben. Die inneren bzw. innenliegenden Einzellagen an einer Biegung weisen eine weniger ausgeprägte Längenänderung als außenliegende Einzellagen auf. Die Bogenlänge in einer "Innenkurve" ist kleiner als eine Bodenlänge in einer "Außenkurve" entlang eines Biegeabschnitts.

Die Pakete von Anodenableitern und/oder Kathodenableitern können zwischen den beiden Biegestellen ohne einen Verbindungsabschnitt vorliegen. Der Zelldeckel kann dabei vorteilhafterweise in einem bereits umgeklappten Zustand vorliegen und somit zum Verschließen des Zellgehäuses lediglich geschoben werden.

Die elektrisch leitende Kopplung der die Anodenableiter und/oder Kathodenableiter mit entsprechenden Kollektoren kann technisch besonders einfach ausgestaltet sein, wenn die Anodenableiter und/oder Kathodenableiter endseitig durch einen Verbindungsabschnitt miteinander verbunden sind. Beispielsweise kann jeweils eine breite Heftung an den Enden der Anodenableiter und/oder Kathodenableiter erfolgen, um an dieser Heftung die Anodenableiter und/oder Kathodenableiter später mit den Kollektoren zu verschweißen. Die an den Enden beispielsweise treppenartig gestuften Anodenableiter und/oder Kathodenableiter können vor einem Verbinden mit den Kollektoren beschnitten und/oder geformt werden.

Entsprechend einer weiteren Ausgestaltung der Batteriezelle sind mindestens zwei entlang einer Breitenrichtung parallel nebeneinander angeordnete Elektrodenanordnungen im Zellgehäuse angeordnet. Zumindest ein erster endseitiger Verbindungsabschnitt einer ersten Elektrodenanordnung und zumindest ein zweiter endseitiger Verbindungsabschnitt einer zweiten Elektrodenanordnung sind parallel nebeneinander oder einander überlappend mit mindestens einem Kollektor elektrisch leitend verbunden.

Die Verbindungsabschnitte der Elektrodenanordnungen können parallel nebeneinander, insbesondere entlang der Breitenrichtung und/oder entlang einer Höhenrichtung zueinander versetzt, mit einem oder mehreren Kollektoren elektrisch leitend verbunden werden. Alternativ oder zusätzlich können die Verbindungsabschnitte der Elektrodenanordnungen einander überlappend, insbesondere mit einer gemeinsamen Schweißnaht oder mit unterschiedlichen Schweißnähten, elektrisch leitend mit einem oder mehreren Kollektoren verbunden werden.

Nach einem weiteren Aspekt der Erfindung wird ein Verfahren zum Herstellen von Batteriezellen mit zumindest zwei an gegenüberliegenden Seiten angeordneten Terminalplatten bereitgestellt. Dabei wird in einem Schritt mindestens eine Elektrodenanordnung mit mindestens einem Elektrodenpaket mit einer Vielzahl von Anodenfolien und Kathodenfolien, welche durch Separatorfolien voneinander getrennt sind, bereitgestellt. Die Anodenfolien weisen endseitig Anodenableiter und die Kathodenfolien endseitig Kathodenableiter auf. Die Anodenableiter der Anodenfolien ragen an einer ersten Seite und die Kathodenableiter der Kathodenfolien an einer zweiten Seite des Elektrodenpakets entlang einer Längenrichtung hinaus.

In einem weiteren Schritt des Verfahrens werden die Anodenableiter und/oder Kathodenableiter bereichsweise unter Ausbildung von mindestens einem Verbindungsabschnitt miteinander verbunden.

Die mindestens eine Elektrodenanordnung wird bei einem weiteren Schritt in ein Zellgehäuse hineingesetzt. Weiterhin werden die Anodenableiter direkt oder über einen endseitig ausgebildeten Verbindungsabschnitt mit einem Kollektor eines ersten Zelldeckels und die Kathodenableiter direkt oder über einen endseitig ausgebildeten Verbindungsabschnitt mit einem Kollektor eines zweiten Zelldeckels elektrisch leitend verbunden.

Bei einem weiteren Schritt des Verfahrens wird das Zellgehäuse durch den ersten Zelldeckel und den zweiten Zelldeckel verschlossen. Die Anodenableiter und/oder Kathodenableiter werden bei dem Schließen des Zellgehäuses durch den mindestens einen Zelldeckel entlang mindestens eines Biegeabschnitts, insbesondere an welchem die Anodenableiter und/oder Kathodenableiter nicht miteinander verbunden sind, gebogen.

Die jeweiligen Schritte des Verfahrens können in der beschriebenen Reihenfolge oder in einer hiervon abweichenden Reihenfolge umgesetzt werden. Beispielsweise können die Anodenableiter oder die Kathodenableiter vor dem Einbringen der Elektrodenanordnung in das Zellgehäuse endseitig mit dem entsprechenden Kollektor verbunden werden. Somit kann ein Zelldeckel mit der Elektrodenanordnung gekoppelt sein. Nach dem Verbinden des Zelldeckels kann die Elektrodenanordnung in das Zellgehäuse hineingeschoben werden. In einem Zwischenschritt kann die Elektrodenanordnung außenseitig isoliert werden, um eine unmittelbare, elektrisch leitende Kontaktierung zum Zellgehäuse zu vermeiden.

Nach dem Einsetzen der Elektrodenanordnung in dem Zellgehäuse kann eine erste Öffnung des Zellgehäuses durch den bereits verbundenen Zelldeckel verschlossen werden. Auf einer gegenüberliegenden Seite können die Anodenableiter oder Kathodenableiter anschließend mit der Kollektorplatte eines zweiten Zelldeckels verbunden werden, wobei die zweite Öffnung des Zellgehäuses durch den weiteren Zelldeckel darauf hin verschlossen werden kann.

Nachstehend werden mehrere Ausführungsbeispiele der Erfindung anhand der Zeichnungen näher erläutert. Es zeigen:
Fig. 1 eine schematische Schnittdarstellung einer Elektrodenanordnung mit einer Vielzahl von Anodenfolien, Kathodenfolien und Separatoren zum Veranschaulichen eines Verfahrens zum Herstellen von Batteriezellen gemäß einer Ausführungsform der Erfindung,
Fig. 2 eine schematische Schnittdarstellung einer Elektrodenanordnung aus Fig. 1 mit zusammengefassten Anodenableitern und Kathodenableitern,
Fig. 3 eine schematische Schnittdarstellung einer Elektrodenanordnung aus Fig. 1 mit partiell verbundenen Anodenableitern und Kathodenableitern,
Fig. 4 eine perspektivische Detailansicht der mittels Verbindungsabschnitten miteinander verbundenen Kathodenableiter,
Fig. 5 eine perspektivische Detailansicht der mittels Verbindungsabschnitten miteinander verbundenen Anodenableiter,
Fig. 6 eine Schnittdarstellung der Elektrodenanordnung aus Fig. 3 mit endseitig geformten Anodenableitern und Kathodenableitern,
Fig. 7 schematische Darstellungen der Elektrodenanordnung aus Fig. 6, bei welcher die Kathodenableiter endseitig mit einem Kollektor eines Zelldeckels verbunden sind,
Fig. 8 eine perspektivische Darstellung der Elektrodenanordnung zum Veranschaulichen eines Positionierungsschritts der Elektrodenanordnung in einem Zellgehäuse,
Fig. 9 eine schematische Schnittdarstellung der Elektrodenanordnung, bei welcher die Anodenableiter endseitig mit einem Kollektor eines Zelldeckels verbunden sind,
Fig. 10 eine Schnittdarstellung einer fertiggestellten Batteriezelle gemäß einer Ausführungsform der Erfindung mit einem beidseitig durch Zelldeckel verschlossenen Zellgehäuse,
Fig. 11 eine perspektivische Detailansicht von bereichsweise miteinander verbundenen Anodenableiter einer Elektrodenanordnung zum Veranschaulichen eines Verfahrens gemäß einer zweiten Ausführungsform der Erfindung,
Fig. 12 eine Schnittdarstellung von mit einem Kollektor verbundenen Anodenableitern aus Fig. 11,
Fig. 13 eine Schnittdarstellung einer fertiggestellten Batteriezelle im Bereich der gebogenen Anodenableiter gemäß einer zweiten Ausführungsform der Erfindung,
Fig. 14 Detailansichten der Elektrodenanordnung aus Fig. 11 zum Veranschaulichen eines Verfahrens zum Einbringen von mehreren Biegungen zwischen zwei Verbindungsabschnitten,
Fig. 15 Schnittdarstellungen zum Veranschaulichen eines Verfahrens gemäß einer dritten Ausführungsform der Erfindung,
Fig. 16 eine Detailansicht einer Batteriezelle im Bereich der Anodenableiter zum Veranschaulichen eines Verfahrens gemäß einer vierten Ausführungsform der Erfindung, und
Fig. 17 eine Detailansicht auf eine einseitig geöffnete Batteriezelle im Bereich der Anodenableiter zum Veranschaulichen eines Verfahrens gemäß einer fünften Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

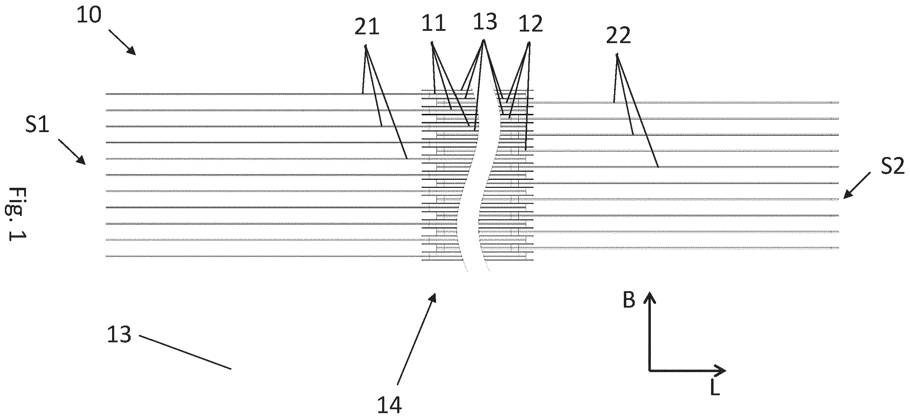

Die Fig. 1 bis Fig. 10 veranschaulichen ein Verfahren zum Herstellen von Batteriezellen 100 gemäß einem ersten Ausführungsbeispiel. Dabei werden beispielhaft prismatische Hardcase Batteriezellen 100 mit Batteriepolen bzw. Terminalplatten 101, 102 auf gegenüberliegenden Schmalseiten hergestellt.

In der Fig. 1 ist eine schematische Schnittdarstellung einer Elektrodenanordnung 10 mit einem Elektrodenpaket 14 mit einer Vielzahl von Anodenfolien 11, Kathodenfolien 12 und Separatoren 13 zum Veranschaulichen eines Verfahrens zum Herstellen von Batteriezellen 100 gemäß einer Ausführungsform der Erfindung gezeigt. Das Elektrodenpaket 14 wird hier bereitgestellt und besteht aus einzelnen Anodenlagen bzw.

Anodenfolien 11, Kathodenlagen bzw. Kathodenfolien 12 und Separatorlagen bzw. Separatorfolien 13.

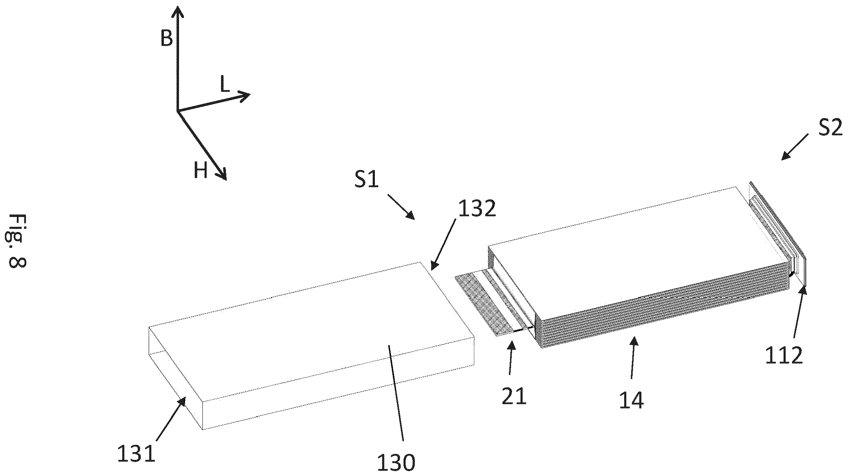

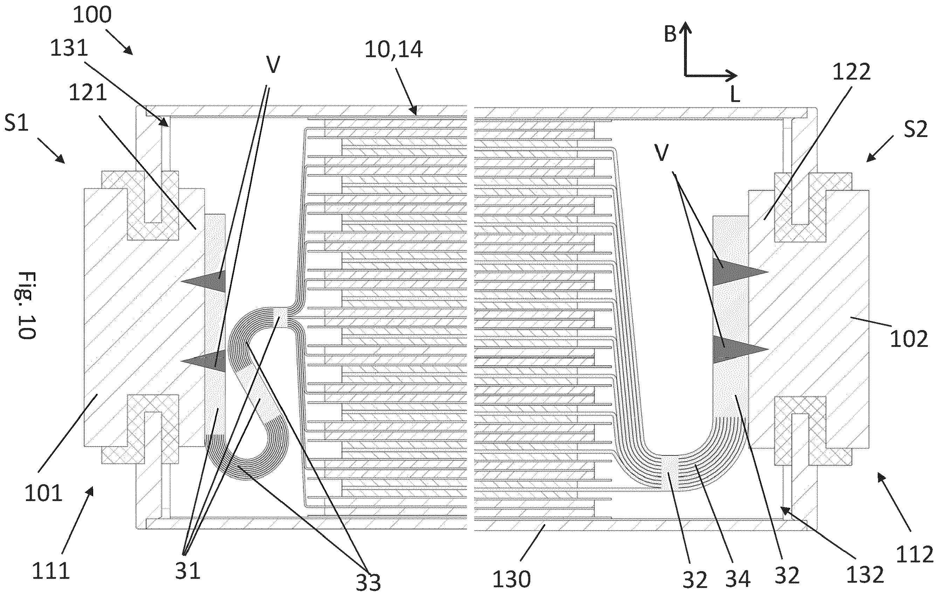

Die Anodenfolien 11 und Kathodenfolien 12 sind durch die Separatorfolien 13 voneinander in Breitenrichtung B getrennt. Die jeweiligen Anodenfolien 11, Kathodenfolien 12 und Separatorfolien 13 erstrecken sich im Wesentlichen entlang einer Höhenrichtung H und Längenrichtung B der Batteriezelle 100. Beispielhaft werden hier die Raumrichtungen B, H, L auf die Batteriezelle 100 bezogen, welche in Fig. 10 gezeigt ist. Die Raumrichtungen B, H, L sind beispielsweise in Fig. 8 besonders übersichtlich veranschaulicht.

Die Anodenfolien 11 weisen endseitig Anodenableiter 21 und die Kathodenfolien 12 endseitig Kathodenableiter 22 auf. Die Anodenableiter 21 der Anodenfolien 11 ragen an einer ersten Seite S1 und die Kathodenableiter 22 der Kathodenfolien 12 an einer zweiten Seite S2 des Elektrodenpakets 14 entlang der Längenrichtung L hinaus.

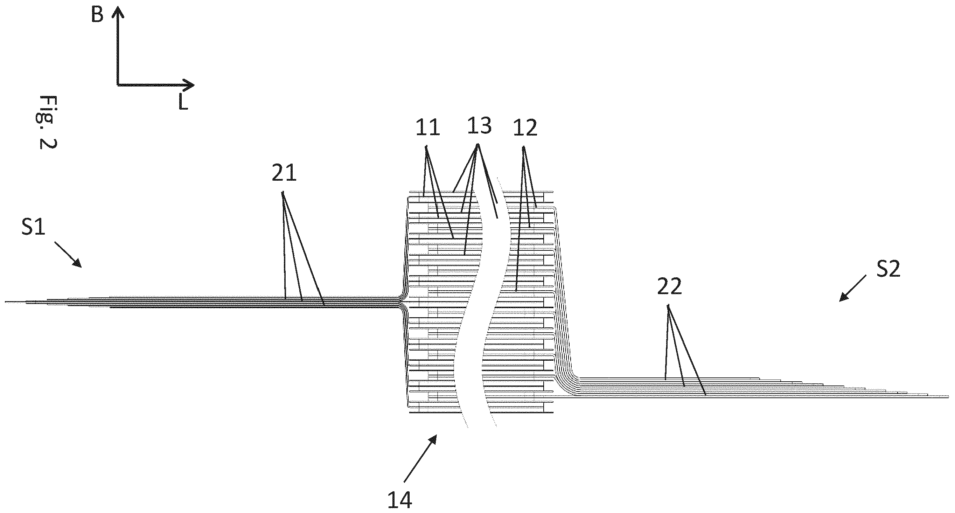

In einem weiteren Schritt des Verfahrens können die Anodenableiter 21 und die Kathodenableiter 22 gebündelt bzw. zusammengefasst werden. Dieser Schritt ist beispielhaft in der Fig. 2 gezeigt. Insbesondere zeigt die Fig. 2 eine schematische Schnittdarstellung des Elektrodenpakets 14 aus Fig. 1 mit zusammengefassten Anodenableitern 21 und Kathodenableitern 22.

Die Anodenableiter 21 bestehen beispielsweise aus Kupfer bzw. sind als sogenannte Kupferfähnchen der Anodenfolien 11 ausgestaltet. Die Anodenableiter 21 sind derart gebündelt, dass diese entlang der Breitenrichtung B mittig bzw. zentriert vom Elektrodenpaket 14 mit den Anodenfolien 11, Kathodenfolien 12 und Separatoren 13 in Längenrichtung L abstehen. Im gezeigten Ausführungsbeispiel haben die gebündelten Anodenableiter 21 im Wesentlichen keinen Abstand in Breitenrichtung B zueinander.

Analog zu den Anodenableitern 21 sind auch die Kathodenableiter 22 zusammengefasst bzw. gebündelt. Die Kathodenableiter 22 bestehen beispielsweise aus einer Aluminiumlegierung und sind als Aluminiumfähnchen der Kathodenfolien 12 ausgeführt. Die Kathodenableiter 22 werden in Breitenrichtung B an einen Rand des Elektrodenpakets 14 der Elektrodenanordnung 10 geführt und dort in Längenrichtung L vom Elektrodenpaket 14 abstehend gebündelt. Die gebündelten Kathodenableiter 22 weisen in Breitenrichtung ebenfalls keinen Abstand zueinander auf

In der Fig. 2 sind auch die durch die Bündelung resultierenden Längenunterschiede der jeweiligen Anodenableiter 21 und Kathodenableiter 22 besonders deutlich visualisiert.

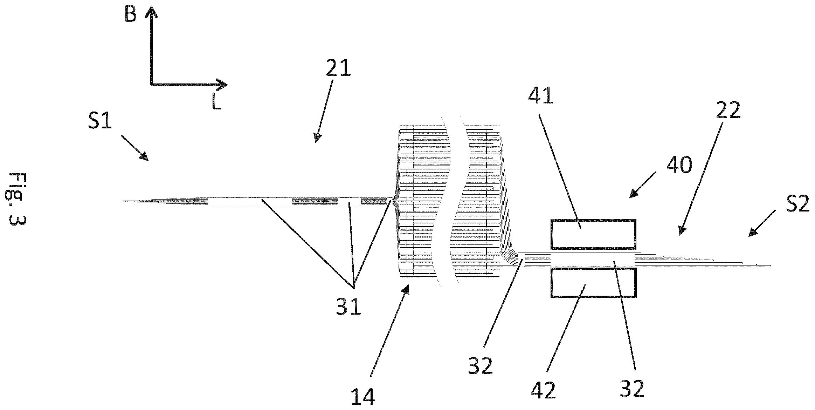

In einem weiteren Schritt des Verfahrens, welcher in der Fig. 3 gezeigt ist, werden die Anodenableiter 21 und die Kathodenableiter 22 bereichsweise unter Ausbildung von Verbindungsabschnitten 31, 32 miteinander verbunden. Die Fig. 3 veranschaulicht in einer schematischen Schnittdarstellung einer Elektrodenanordnung 10 aus Fig. 1 mit partiell miteinander verbundenen Einzellagen von Anodenableitern 21 und Kathodenableitern 22.

Weiterhin ist eine beispielhafte Vorrichtung bzw. ein Werkzeug 40 zum Durchführen von Ultraschallschweißungen der Anodenableiter 21 und Kathodenableiter 22 dargestellt, welche aus einer Sonotrode 41 und einem Amboss 42 besteht. Alternativ kann die Vorrichtung 40 dazu eingerichtet sein, ein alternatives Verbindungsverfahren, wie beispielsweise Laserschweißen, durchzuführen.

Im dargestellten Ausführungsbeispiel sind in die Anodenableiter 21 drei Verbindungsabschnitte 31 und in die Kathodenableiter 22 zwei Verbindungsabschnitte 32 eingebracht. Die jeweiligen Verbindungsabschnitte 31, 32 sind in Längenrichtung L voneinander beabstandet, sodass zwischen den Verbindungsabschnitten 31, 32 die Anodenableiter 21 und die Kathodenableiter 22 in Form von nicht verbundenen Einzellagen vorliegen.

Die Verbindungsabschnitte 31, 32 sind streifenförmig ausgestaltet, wobei jeweils eine schmale Heftung in Form eines Verbindungsabschnitts 31, 32 unmittelbar hinter einer 90°-Biegung in die Horizontale bzw. in Längenrichtung L, der an den Stirnseiten des Elektrodenpakets 14 herunter- bzw. hochlaufenden Ableiter 21, 22 erfolgt, sodass die jeweiligen Anodenfolien 11 und Kathodenfolien 12 beim Falten der Anodenableiter 21 und Kathodenableiter 22 nicht aus dem Elektrodenpaket 14 herausgezogen werden können.

Jeweils eine breite Heftung in Form von Verbindungsabschnitten 31, 32 erfolgt an den Enden der Anodenableiter 21 und Kathodenableiter 22. Die Breite bezieht sich hierbei auf die Ausdehnung der Verbindungsabschnitte 31, 32 in Längenrichtung L. An diesen breiter ausgebildeten Verbindungsabschnitten 31, 32 kann in einem weiteren Schritt des Verfahrens eine elektrisch leitende Verbindung zwischen den Ableitern 21, 22 und entsprechenden Kollektoren erfolgen.

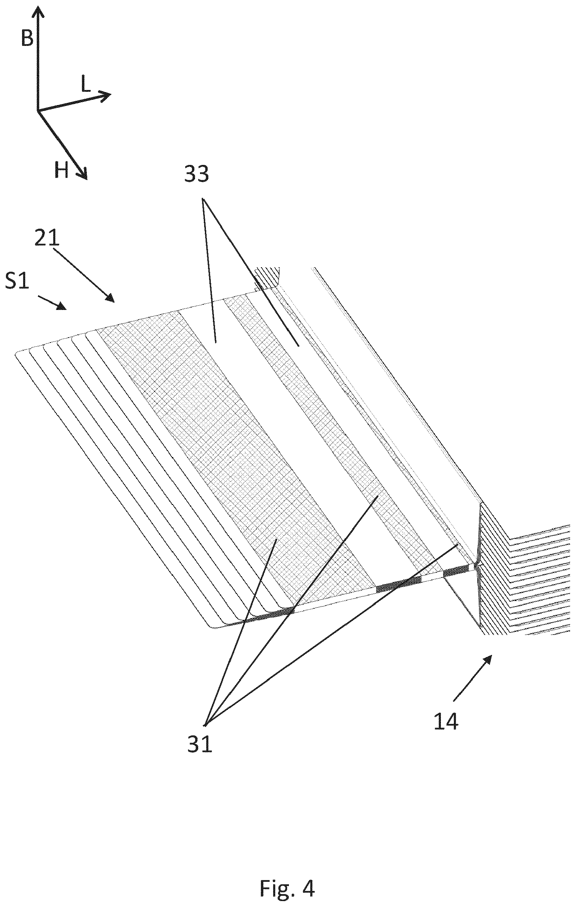

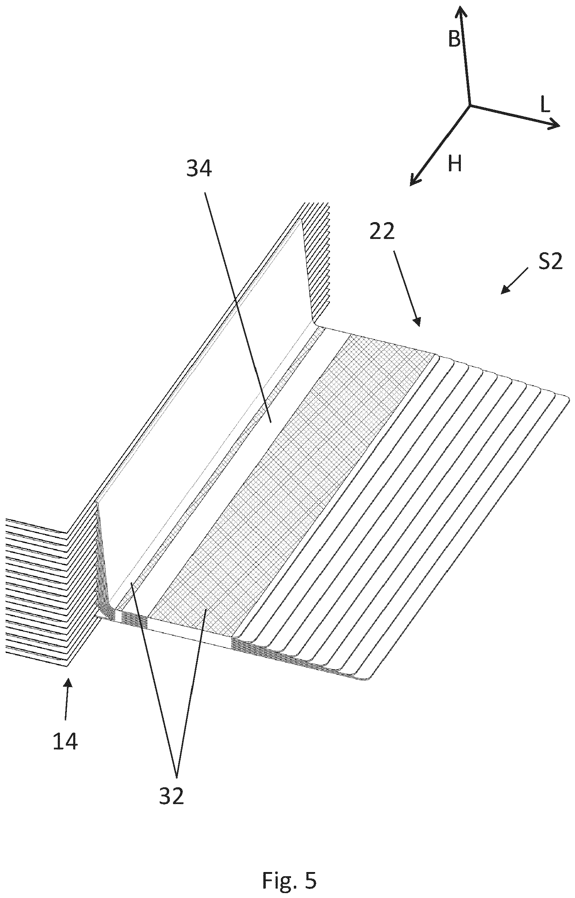

Die Fig. 4 zeigt eine perspektivische Detailansicht der mittels Verbindungsabschnitten 32 miteinander verbundenen Kathodenableiter 22 im Detail. Analog hierzu zeigt die Fig. 5 eine perspektivische Detailansicht der mittels Verbindungsabschnitten 31 miteinander verbundenen Anodenableiter 21. Die jeweiligen Ausdehnungen der Verbindungsabschnitte 31, 32 in Längenrichtung L und Höhenrichtung H sind in der Fig. 4 und Fig. 5 veranschaulicht.

Die jeweiligen Anodenableiter 21 und Kathodenableiter 22 werden nur partiell bzw. abschnittsweise und nicht vollständig miteinander verbunden. An den voraussichtlichen oder geplanten Biegungen der Anodenableiter 21 und/oder Kathodenableiter 22 werden diese nicht miteinander geheftet oder verbunden, sodass entlang der Längenrichtung L zwischen den Verbindungsabschnitten 31, 32 Biegeabschnitte 33, 34 aus einer Vielzahl von flexiblen Einzellagen der Anodenableiter 21 oder Kathodenableiter 22 gebildet werden.

In der Fig. 4 sind beispielsweise die Anodenableiter 21 mit den eingebrachten Verbindungsabschnitten 31 und den entsprechenden Biegeabschnitten 33 veranschaulicht. Analog hierzu zeigt die Fig. 5 in einer Detailansicht die Kathodenableiter 22 mit eingebrachten Verbindungsabschnitten 32 und den in Längenrichtung L zwischen den Verbindungsabschnitten 32 gebildeten Biegeabschnitten 34.

Durch die Verbindung der als Einzellagen ausgebildeten Anodenableiter 21 und Kathodenableiter 22 im Bereich der Verbindungsabschnitte 31, 32 sind diese an den Verbindungsabschnitten 31, 32 massiv bzw. steif und lassen sich nur mit einem erhöhten Kraftaufwand verbiegen oder verformen. An den Biegeabschnitten 33, 34 ist ein gegenüber den Verbindungsabschnitten 31, 32 geringerer Kraftaufwand erforderlich, um eine Biegung oder Faltung herbeizuführen.

Die Anodenableiter 21 weisen zwei Biegeabschnitte 33 auf, welche in Längenrichtung L zwischen den drei Verbindungsabschnitten 31 ausgebildet sind. Die Kathodenableiter 22 weisen in dem dargestellten Ausführungsbeispiel einen Biegeabschnitt 34 auf, welcher in Längenrichtung L zwischen den beiden Verbindungsabschnitten 32 geformt ist.

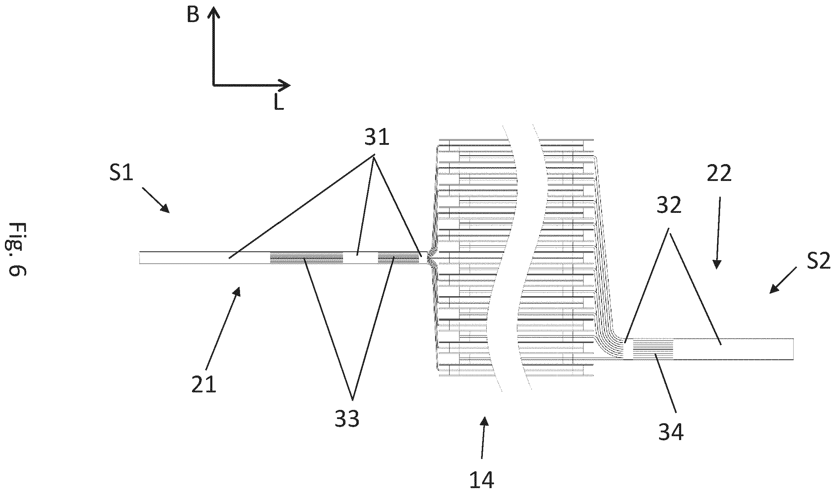

Die Fig. 6 zeigt eine Schnittdarstellung der Elektrodenanordnung 10 aus Fig. 3 mit endseitig geformten Anodenableitern 21 und Kathodenableitern 22. Die endseitige Formung der Anodenableiter 21 und Kathodenableiter 22 kann ebenfalls einen Schritt des Verfahrens bilden, bei dem die treppenartig gestuften Enden der Anodenableiter 21 und Kathodenableiter 22 beschnitten werden. Entsprechende Schnittkanten können vor den Verbindungsabschnitten 31, 32 oder innerhalb der Verbindungsabschnitte 31, 32 liegen.

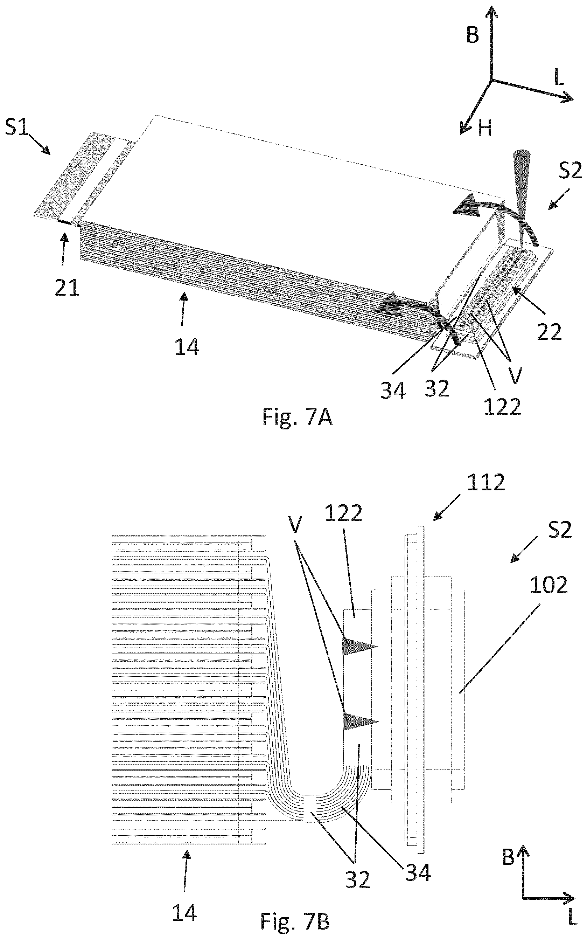

Die Fig. 7 zeigt einen weiteren Schritt des Verfahrens, bei dem die Kathodenableiter 22 an einem in Längenrichtung L endseitig ausgebildeten Verbindungsabschnitt 32 mit einem Kollektor 122 eines zweiten Zelldeckels 112 elektrisch leitend verbunden werden. Dieser Schritt erfolgt im dargestellten Ausführungsbeispiel noch vor dem Einbringen der Elektrodenanordnung 10 in ein Zellgehäuse (s. Fig. 8).

Beim Zusammenbau der kompletten Batteriezelle 100 werden zuerst die gehefteten Aluminiumfähnchen bzw. Kathodenableiter 22 der Kathodenfolien 12 auf einen zweiten Kollektor 122 des zweiten Zelldeckels 112, welcher einen Plus-Pol darstellt, geschweißt. Die entsprechenden Verbindungsstellen V sind in Form von Schweißnähten in der Fig. 7A und Fig. 7B dargestellt.

Der zweite Zelldeckel 112 besteht beispielhaft aus einer zweiten Terminalplatte 102, welche außenseitig angeordnet ist, und einem zweiten Kollektor 122. Der Kollektor 122 ist innenseitig angeordnet und dient der elektrischen Kontaktierung der Kathodenableiter 22. Der Kollektor 122 ist elektrisch mit der zweiten Terminalplatte 102 verbunden. Weitere Bestandteile des zweiten Zelldeckels 102, wie beispielsweise Isolatoren, Dichtungen, Ausgleichselemente, elektrische Durchführungen und dergleichen, sind der Einfachheit halber nicht dargestellt bzw. beziffert.

Durch die horizontale Lage der Kathodenableiter 22 und des Zelldeckels 112 bzw. des zweiten Kollektors 122, d.h. parallel zur Grundfläche des Elektrodenpakets 14, wird der Zugang für einen nicht dargestellten Niederhalter zum Zusammenpressen der Fügepartner (Kathodenableiter 22 und zweiter Kollektor 122) sowie für einen Laserstrahl gewährleistet. Die entsprechende Ausrichtung der Fügepartner für den Schweißvorgang und das Einbringen der Verbindungsstellen V ist in der Fig. 7A veranschaulicht.

Die Kathodenableiter 22 werden im Bereich eines randseitigen bzw. endseitigen Verbindungsabschnitts 32, welcher zuvor geformt bzw. geschnitten wurde, mit dem zweiten Kollektor 122 verbunden.

Anschließend wird der zweite Zelldeckel 112 um 90° geklappt, sodass sich der zweite Zelldeckel 112 parallel zur Breitenrichtung B erstreckt bzw. sodass eine Flächennormale der zweiten Terminalplatte 102 sich in Längenrichtung L erstreckt. Durch diese rotatorische Bewegung des Zelldeckels 112 werden die, mit dem zweiten Kollektor 122 verbundenen, Kathodenableiter 22 im Bereich ohne Heftung aus leicht verformbaren Einzellagen d.h. im Biegeabschnitt 34 gefaltet oder gebogen. Die Fig. 7B veranschaulicht die entlang des Biegeabschnitts 34 gefalteten oder gebogenen Kathodenableiter 22 bei einem final ausgerichteten, zweiten Zelldeckel 112.

In der Fig. 8 ist eine perspektivische Darstellung der Elektrodenanordnung 10 zum Veranschaulichen eines Positionierungsschritts in einem Zellgehäuse 130 gezeigt. Das Zellgehäuse 130 weist in Längenrichtung L an zwei einander gegenüberliegenden Seiten S1, S2 jeweils eine Öffnung 131, 132 auf.

Die in Fig. 7B gezeigte Anordnung aus der Elektrodenanordnung 10 und dem zweiten Zelldeckel 112 wird nun in einem weiteren Schritt des Verfahrens durch eine zweite Öffnung 132 des Zellgehäuses 130 hindurch in ein Innenvolumen des Zellgehäuses 130 geschoben. Das Elektrodenpaket 14 kann zuvor elektrisch isoliert werden, um einen direkten Kontakt der Anodenfolien 11 und Kathodenfolien 12 mit dem Zellgehäuse 130 zu vermeiden. Beispielsweise kann das Elektrodenpaket 14 mit einer schlauchartigen Isolation aus Kunststoff (nicht dargestellt) versehen und in den kastenförmigen Zellgehäusemantel des Zellgehäuses 130 hineingeschoben werden.

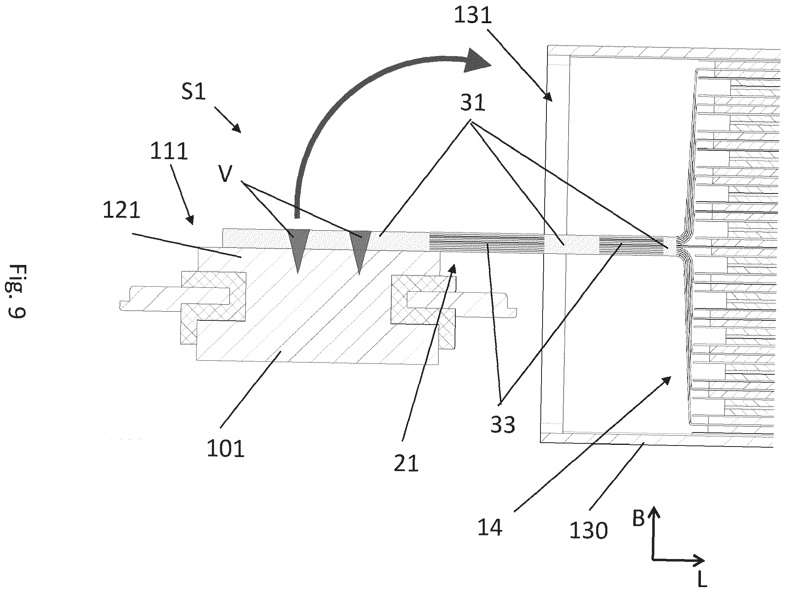

In einem weiteren Schritt des Verfahrens zum Herstellen von Batteriezellen 100 werden im dargestellten Ausführungsbeispiel die Anodenableiter 21 über einen in Längenrichtung L endseitig bzw. randseitig ausgebildeten Verbindungsabschnitt 31 mit einem ersten Kollektor 121 eines ersten Zelldeckels 111 elektrisch leitend verbunden. Dieser Schritt ist in der Fig. 9 mit Hilfe einer schematischen Schnittdarstellung der Elektrodenanordnung 10 illustriert, bei der die Anodenableiter 21 endseitig mit dem ersten Kollektor 121 des ersten Zelldeckels 111 verbunden sind. Die entsprechenden Verbindungsstellen V können analog zu den Ausführungen in Fig. 7A und Fig. 7B umgesetzt werden.

Beispielsweise kann das in horizontaler Lage seitlich (d.h. in oder entgegen der Längenrichtung L) herausstehende Paket aus Anodenableitern 21 mit partiell verschweißten Kupferfähnchen bzw. Einzellagen der Anodenableiter 21 im Bereich der Verbindungsabschnitte 31 mit dem ebenfalls in horizontaler Lage befindlichen ersten Kollektor 121 auf der Rückseite des ersten Zelldeckels 111 verschweißt werden. Der ersten Zelldeckel 111 bildet beispielhaft einen Minuspol der Batteriezelle 100 aus und besteht analog zum zweiten Zelldeckel 112 aus einem ersten Kollektor 121 und einer ersten Terminalplatte 101, welche elektrisch leitend miteinander verbunden sind. Die weiteren Komponenten des ersten Zelldeckels 111 sind auch hier der Übersicht halber nicht dargestellt.

Der erste Zelldeckel 111 wird nach dem Verschweißen der Anodenableiter 21 um 90° nach oben geklappt und anschließend in die erste Öffnung 131 des Zellgehäuses 130 hineingepresst. Hierdurch wird das Zellgehäuse 130 an der ersten Öffnung 131 durch den ersten Zelldeckel 111 fluiddicht verschlossen. Analog zu der ersten Seite S1 wird die zweite Öffnung 132 des Zellgehäuses 130 durch den zweiten Zelldeckel 112 auf der zweiten Seite S2 fluiddicht verschlossen.

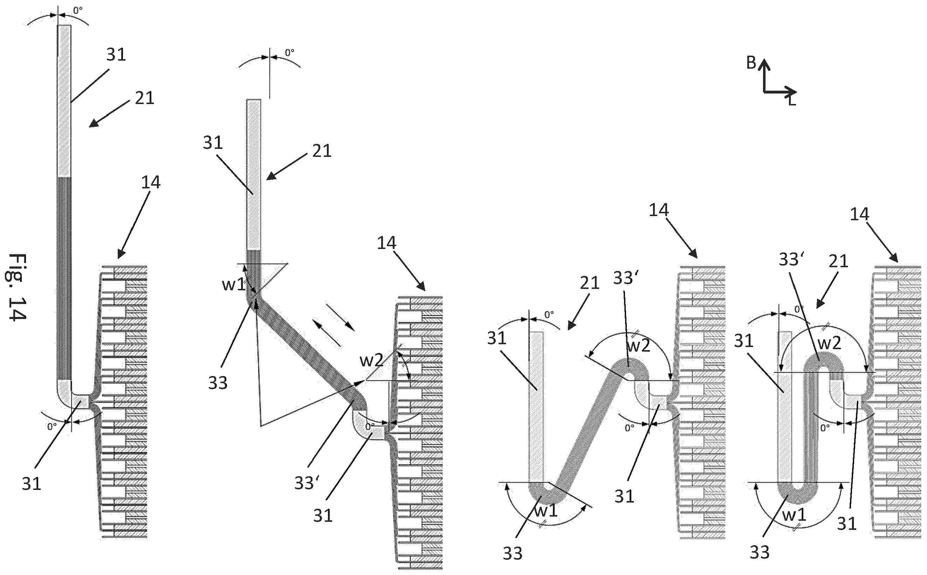

Durch das Verdrehen bzw. Klappen des ersten Zelldeckels 111 werden die als Einzellagen vorliegenden Anodenableiter 21 im Bereich der beiden Biegeabschnitte 33 gebogen. Im dargestellten Ausführungsbeispiel werden die Anodenableiter 21 im Bereich der beiden Biegeabschnitte 33 in entgegengesetzte Richtungen bzw. Winkel gebogen, sodass eine Z-förmige Schleife geformt werden kann. Die Fig. 14 veranschaulicht mit Hilfe von mehreren schematischen Schnittdarstellungen ein besonders definiertes bzw. präzises Biegen der Anodenableiter 21 entlang mehrerer Biegeabschnitte 33 in entgegengesetzte Richtungen bzw. Winkel.

Der Verbindungsabschnitt 31 zwischen den beiden Biegestellen bzw. Biegeabschnitten 33 dient hier zur Verhinderung des Auffächerns der als Einzellagen vorliegenden Anodenableiter 21. Im Bereich der Biegeabschnitten 33 können sich die Einzellagen der Anodenableiter 21 jedoch frei auffächern,

Nach dem Einsetzen der Elektrodenanordnung 10 in das Zellgehäuse 130 und dem Verschließen der beiden Öffnungen 131, 132 des Zellgehäuses 130 durch die bereits mit den Anodenableitern 21 und Kathodenableitern 22 verbundenen Zelldeckel 111, 112 auf gegenüberliegenden Seiten S1, S2, kann die Batteriezelle 100 bereits fertiggestellt werden. Diesen Schritt zeigt die Fig. 10 in einer Schnittdarstellung der beispielhaft fertiggestellten Batteriezelle 100 gemäß einer Ausführungsform der Erfindung.

In der Fig. 10 ist die z-förmig bzw. s-förmige Faltung oder Biegung der Anodenableiter 21 durch die beiden Biegeabschnitte 33 besonders deutlich illustriert.

Die durch das Verfahren fertiggestellte Batteriezelle 100 weist somit das Zellgehäuse 130 auf, welches an einer ersten Seite S1 durch einen ersten Zelldeckel 111 und an einer zweiten Seite S2 durch einen zweiten Zelldeckel 112 verschlossen ist. Dabei wird durch den ersten Zelldeckel 111 die erste Öffnung 131 des Zellgehäuses 130 und durch den zweiten Zelldeckel 112 die zweite Öffnung 132 des Zellgehäuses 130 fluiddicht verschlossen. Die Zelldeckel 111, 112 können mechanisch in die Öffnungen 131, 132 des Zellgehäuses 130 eingebracht werden, um eine fluiddichte Verbindung zu formen. Je nach Ausgestaltung können die Zelldeckel 111, 112 in den Öffnungen 131, 132 alternativ oder zusätzlich verschweißt, gebördelt, gelötet oder geklebt werden, um eine fluiddichte Verbindung auszubilden.

Die Batteriezelle 100 weist im dargestellten Ausführungsbeispiel eine im Zellgehäuse 130 angeordnete, erfindungsgemäße Elektrodenanordnung 10 mit dem Elektrodenpaket 14 auf. Die Anodenableiter 21 und die Kathodenableiter 22 der Elektrodenanordnung 10 sind elektrisch leitend mit den Kollektoren 121, 122 der jeweiligen Zelldeckel 111, 112 verbunden und sind über die außenseitigen Terminalplatten 101, 102 elektrisch verbindbar, um die Batteriezelle 100 beispielsweise aufladen und entladen zu können.

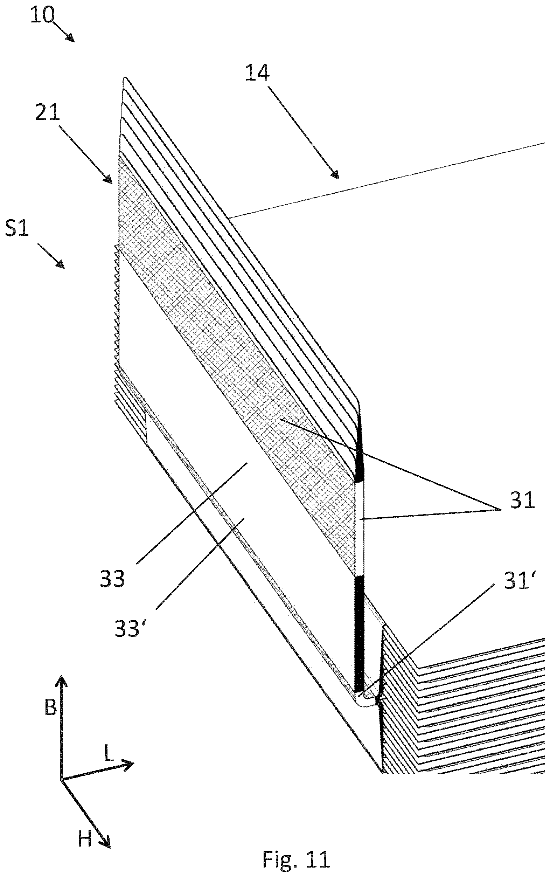

Die Fig. 11 bis Fig. 14 veranschaulichen ein Verfahren zum Herstellen von Batteriezellen 100 gemäß einem zweiten Ausführungsbeispiel. Dabei werden beispielhaft prismatische Hardcase Batteriezellen 100 mit Batteriepolen bzw. Terminalplatten 101, 102 auf entlang der Längenrichtung L gegenüberliegenden Schmalseiten hergestellt.

Die Fig. 11 zeigt eine perspektivische Detailansicht von bereichsweise miteinander verbundenen Anodenableitern 21 einer Elektrodenanordnung 10. Analog zu dem ersten Ausführungsbeispiel sind die Anodenableiter 21 als Kupferfähnchen der Anodenfolien 11 ausgestaltet und können aus Kupfer oder einer Kupferlegierung bestehen. Auch hier werden die Anodenableiter 21 entlang der Breitenrichtung B mittig bzw. entlang einer Ausdehnung des Elektrodenpakets 14 in Breitenrichtung zentriert zusammengefasst. Die Heftung der Anodenableiter 21 erfolgt somit am Berühr- und Biegepunkt in Stapelmitte des Elektrodenpakets 14.

Weiterhin erfolgt eine Verbindung der Anodenableiter 21 endseitig bzw. am Ende, an welchem später die Verschweißung mit dem Kollektor 121 vorgenommen wird. Die jeweiligen Einzellagen der Anodenableiter 21 werden an somit zwei voneinander beabstandeten Verbindungsabschnitten 31 stoffschlüssig miteinander verbunden.

An den Verbindungsabschnitten 31, 31 ` können die Einzellagen der Anodenableiter 21 beispielsweise durch Ultraschallschweißen miteinander verbunden werden.

Die am Ende treppenförmig gestuften Einzellagen der Anodenableiter 21 werden in einem nachfolgenden Schritt beschnitten.

Ein erster Verbindungsabschnitt 31', welcher dem Elektrodenpakt 14 benachbart angeordnet ist, wird nicht wie bisher gerade bzw. plan geformt, sondern gebogen. Dabei wird beim Ultraschallschweißen oder nachträglich eine 90° Biegung um eine Biegeachse parallel zur Höhenrichtung H in den ersten Verbindungsabschnitt 31' eingebracht, sodass die partiell zusammengefügten Anodenableiter 21 quer zur Längenrichtung L vom Elektrodenpaket 14 abstehen. Die Fig. 11 veranschaulicht diesen Schritt des Verfahrens.

Der Bereich zwischen den beiden Verbindungsabschnitten 31, 31` ist im dargestellten Ausführungsbeispiel dazu konfiguriert, zwei Biegeabschnitte 33, 33' auszubilden. Im Unterschied zum ersten Ausführungsbeispiel des Verfahrens erfolgt keine Trennung der Biegeabschnitte 33, 33' durch einen dritten Verbindungsabschnitt 31. Vielmehr werden die zwei Biegeabschnitte 33, 33' derart geformt, dass eine wechselseitige Aufhebung von Bogenlängenänderungen beim Falten realisiert wird, wodurch eine unkontrollierte Auffächerung der Einzellagen der Anodenableiter 21 zwischen den Biegeabschnitten 33, 33' vermieden werden kann.

Der endseitige Verbindungsabschnitt 31 der Anodenableiter 21 wird parallel zur finalen Lage bzw. Position des ersten Zelldeckels 111 in der fertigen Batteriezelle 100 ausgerichtet.

Im nächsten Schritt kann die Elektrodenanordnung 10 analog zum ersten Ausführungsbeispiel des Verfahrens an der zweiten Seite S2 mit dem zweiten Kollektor 122 elektrisch verbunden und anschließend in dem Zellgehäuse 130 positioniert werden. Dabei kann das Elektrodenpaket 14 ebenfalls mit einer isolierenden Hülle bzw. schlauchförmigen Kunststofffolie versehen werden. Das Zellgehäuse 130 ist beispielhaft als ein kastenförmiger Zellgehäusemantel ausgestaltet, welcher an zwei einander gegenüberliegenden Seiten S1, S2 mit Öffnungen 131, 132 versehen ist.

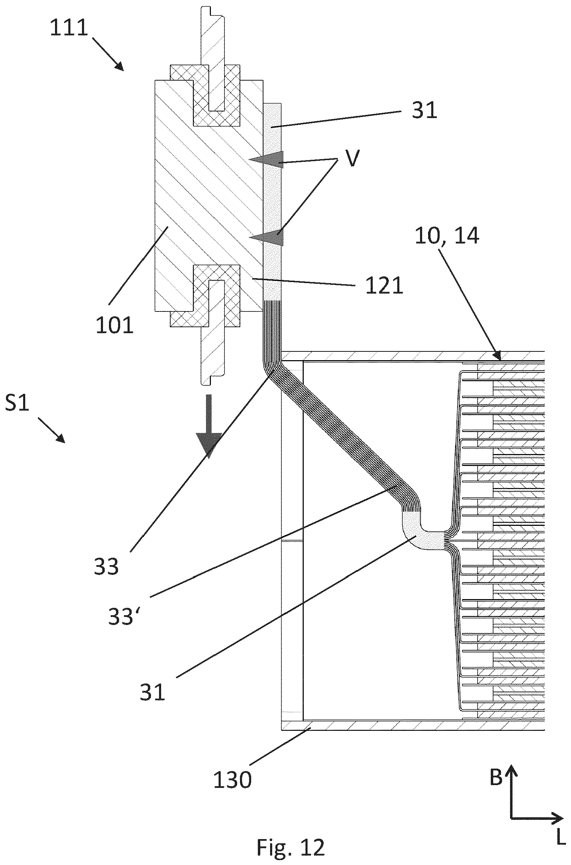

Die Fig. 12 veranschaulicht in einer Schnittdarstellung die mit dem ersten Kollektor 121 verbundenen Anodenableiter 21 aus Fig. 11. Der über den ersten Kollektor 121 mit den Anodenableitern 21 verbundene Zelldeckel 111 weist bereits eine Ausrichtung parallel zu seiner finalen Einbaulage auf.

Zum Versetzen des ersten Zelldeckels 111 in die finale Einbaulage, bei der die erste Öffnung 131 des Zellgehäuses 130 verschlossen wird, erfolgt eine Z-förmige Faltung der Anodenableiter 21 in den Biegebereichen 33, 33' zwischen den Verbindungsabschnitten 31, 31'. Hierzu wird bei der Faltung der Anodenableiter 21 der erste Zelldeckel 111 entsprechend dem in Fig. 12 dargestellten Pfeil entgegen der Breitenrichtung B zur ersten Öffnung 131 hin bewegt.

Ein Rand des Zellgehäuses 130 kann je nach Ausgestaltung des Verfahrens zum Ausbilden eines, dem ersten Zelldeckel 111 zugewandten, Biegeabschnitts 33 fungieren bzw. eine entsprechende Biegung initiieren. Je nach Ausgestaltung des Verfahrens können hier die Kathodenableiter 22 nach dem Einbringen des Elektrodenpakets 14 in das Zellgehäuse 130 oder vor dem Einbringen des Elektrodenpakets 14 in das Zellgehäuse 130 mit dem Kollektor 122 des zweiten Zelldeckels 112 elektrisch leitend verbunden werden. Dies kann analog zur in Fig. 7A dargestellten Konfiguration erfolgen, bei welcher die Kathodenableiter 22 entlang der Längenrichtung L horizontal liegend positioniert und mit Hilfe eines Niederhalters gegen den zweiten Kollektor 122 gepresst werden, um durch Laserschweißen Verbindungsstellen V in Form von Schweißnähten auszubilden.

Die Anodenableiter 21 können endseitig ebenfalls in eine horizontale Lage entsprechend der Fig. 9 versetzt werden, um eine Schweißverbindung zwischen dem ersten Kollektor 121 und dem endseitigen Verbindungsabschnitt 31 herzustellen.

Alternativ kann eine elektrisch leitende Verbindung zwischen den Anodenableitern 21 und dem ersten Kollektor 121 bei einer vertikalen Ausrichtung des Zelldeckels 111 quer zur Längenrichtung L, wie diese in Fig. 12 gezeigt ist, erzeugt werden.

Nach der Schweißung der Anodenableiter 21 und dem ersten Kollektor 121 wird der erste Zelldeckel 111 nach unten entsprechend dem Pfeil geschoben und dann in den Zellgehäusemantel des Zellgehäuses 130 eingepresst, wobei sich die Anodenableiter 21 im Bereich zwischen den beiden Verbindungsabschnitten 31, 31` in eine Z-förmige Schleife legt.

Es werden somit zwei Biegeabschnitte 33, 33' in dem Biegebereich zwischen den beiden Verbindungsabschnitten 31, 31' der Anodenableiter 21 ausgebildet, die in allen Schritten den gleichen aber entgegengesetzten Biegewinkel besitzen, sodass sich die Bodenlängenänderungen der Einzellagen der Anodenableiter 21 im Bereich der beiden Biegeabschnitte 33, 33' genau ausgleichen. Hierdurch kann die Montage des ersten Zelldeckels 111 ohne Stauchung oder Streckung oder Auffächerung der Einzelfähnchen bzw. Einzellagen der Anodenableiter 21 auch mit einer besonders geringen Krafteinwirkung erfolgen.

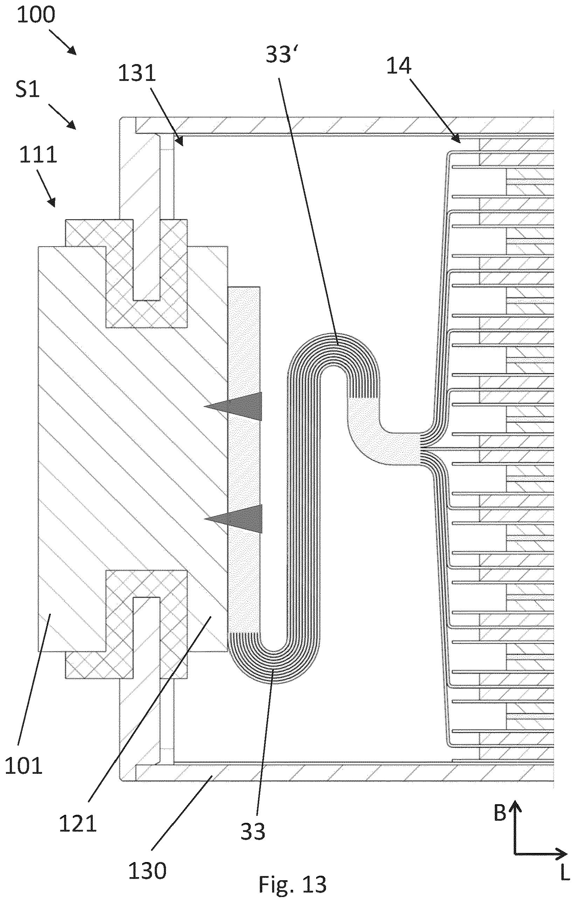

Die Fig. 13 zeigt eine Schnittdarstellung einer fertiggestellten Batteriezelle 100 im Bereich der gebogenen Anodenableiter 21 gemäß einer zweiten Ausführungsform der Erfindung. Dabei sind die partiell miteinander verbundenen Anodenableiter 21 veranschaulicht, welche im Bereich zwischen den beiden Verbindungsabschnitten 31, 31' an zwei Biegeabschnitten 33, 33' in entgegengesetzte Richtungen gebogen sind.

Die Fig. 14 zeigt Detailansichten der Elektrodenanordnung 10 aus Fig. 11 zum Veranschaulichen eines Verfahrens zum Einbringen von mehreren Biegungen zwischen zwei Verbindungsabschnitten 31, 31'.

Die in Fig. 13 gezeigte Z-förmige Biegung der Anodenableiter 21 wird dadurch erreicht, dass die Anodenableiter an zwei Biegeabschnitten 33, 33' gefaltet werden, wobei an einem ersten Biegeabschnitt 33 eine Biegung in einem ersten Biegewinkel w1 im Uhrzeigersinn und an einem zweiten Biegeabschnitt 33` eine Biegung mit einem zweiten Biegewinkel w2 identisch zum ersten Biegewinkel w1 des ersten Biegeabschnitts 33 entgegen dem Uhrzeigersinn erfolgt. Hierdurch können die Bogenlängenänderungen beim Biegen (innere Einzellagen ändern ihre Länge geringer als außenliegende Einzellagen der Anodenableiter 21 und/oder Kathodenableiter 22) wechselseitig genau aufheben. Dies kann besonders vorteilhafterweise durch das Verschieben des Zelldeckels 111 in Breitenrichtung B realisiert werden. Dabei kann ein Strecken oder Stauchen der Einzellagen der Anodenableiter 21 zwischen den Verbindungsabschnitten 31, 31' vermieden werden.

Durch ein gezieltes Verschieben des ersten Zelldeckels 111 in oder entgegen der Breitenrichtung B kann eine zeitgleiche Biegung der Anodenableiter 21 an den beiden Biegeabschnitten 33, 33' in entgegengesetzte Richtungen realisiert werden. Hierdurch kann ein Biegewinkel des ersten Biegeabschnitts 33 im Uhrzeigersinn einem Biegewinkel des zweiten Biegeabschnitts 33` entgegen Uhrzeigersinn entsprechen. Hierdurch können Bogenlängenänderungen durch relative Verkürzung der an Biegestelle inneren Einzellagen und relative Verlängerung der äußeren Einzellagen der Anodenableiter genau aufheben.

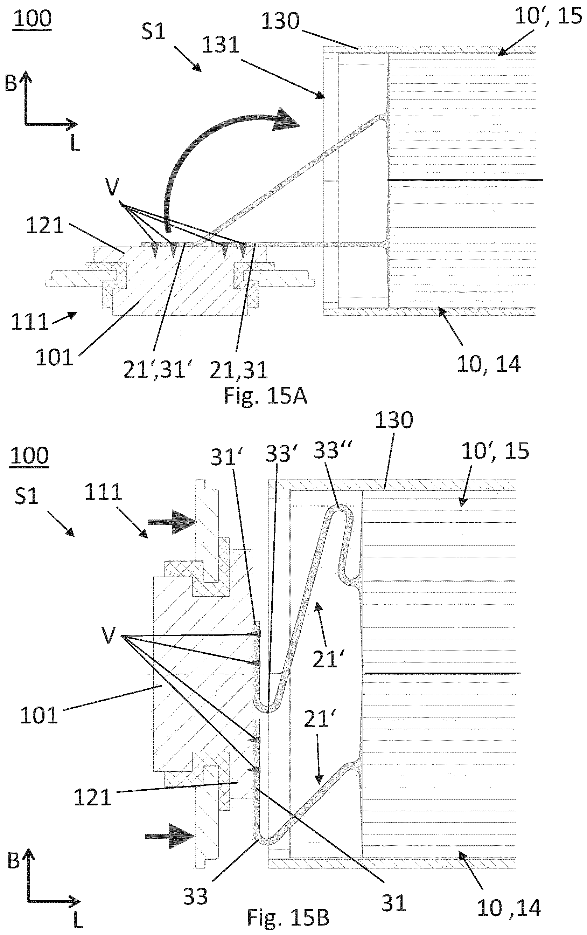

In der Fig. 15A und Fig. 15B sind Schnittdarstellungen zum Veranschaulichen eines Verfahrens gemäß einer dritten Ausführungsform der Erfindung gezeigt. Im Unterschied zu den bereits gezeigten und beschriebenen Ausführungsformen des Verfahrens werden hier zwei Elektrodenanordnungen 10, 10' mit einem ersten Elektrodenpaket 14 und einem zweiten Elektrodenpaket 15 eingesetzt.

Die Elektrodenpakete 14, 15 der Elektrodenanordnungen 10, 10' sind entlang der Breitenrichtung B parallel nebeneinander angeordnet. Der Einfachheit halber ist nur die ersten Seite S1 der Batteriezelle 100 gezeigt.

Im dargestellten Ausführungsbeispiel sind ein erster endseitiger Verbindungsabschnitt 31 der ersten Elektrodenanordnung 10 und ein zweiter endseitiger Verbindungsabschnitt 31' einer zweiten Elektrodenanordnung 10` in Breitenrichtung B (bezögen auf die finale Einbauposition des ersten Zelldeckels 111 in Fig. 15B) parallel nebeneinander bzw. zueinander versetzt mit einem gemeinsamen ersten Kollektor 121 des ersten Zelldeckels 111 elektrisch leitend verbunden. Bei einem Einbringen der Verbindungen V in Form von Schweißverbindungen bzw. Schweißnähten können die Verbindungsabschnitte 31, 31' in Längenrichtung L zueinander versetzt liegen. Durch ein Umklappen des ersten Zelldeckels 111 werden die Anodenableiter 21, 21' entlang ihrer Biegeabschnitte 33, 33', 33" gefaltet.

Im dargestellten Ausführungsbeispiel weisen die Anodenableiter 21 der ersten Elektrodenanordnung 10 einen Biegeabschnitt 33 auf. Je nach Ausgestaltung und Länge der Anodenableiter 21 können diese auch zwei Biegeabschnitte 33 aufweisen. Die Anodenableiter 21' der zweiten Elektrodenanordnung 10` weisen zwei Biegeabschnitte 33', 33" auf, welche jeweils durch nicht dargestellte Verbindungsabschnitte 31' voneinander separiert sein können. Bedingt durch die Anordnung der Biegeabschnitte 33, 33', 33" können die Anodenableiter 21 der ersten Elektrodenanordnung 10 an einer Stelle gebogen und die Anodenableiter 21' der zweiten Elektrodenanordnung 10` an zwei Stellen gebogen werden, insbesondere in einer S-Form oder Z-Form. Die Fig. 15B veranschaulicht die Möglichkeit, die jeweiligen Anodenableiter 21, 21' und/oder Kathodenableiter 22 von mehreren Elektrodenanordnungen 10, 10' unterschiedliche zu biegen oder zu falten bei der Herstellung von Batteriezellen 100.

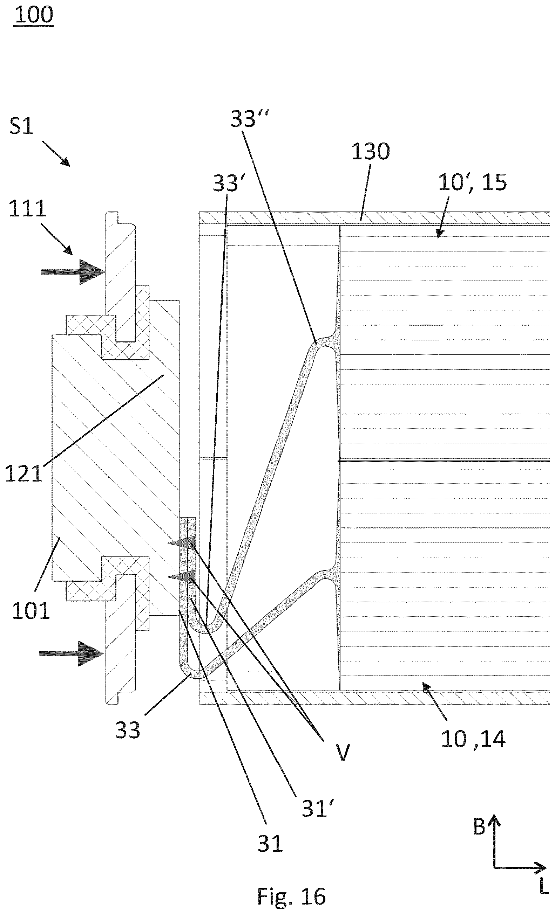

Die Fig. 16 zeigt eine weitere Detailansicht einer Batteriezelle 100 im Bereich der Anodenableiter 21 zum Veranschaulichen eines Verfahrens gemäß einer vierten Ausführungsform der Erfindung. Im Unterschied zu der in Fig. 15B gezeigten Ausführungsform der Batteriezelle 100 können die Verbindungsabschnitte 31, 31' der Elektrodenanordnungen 10, 10' einander überlappend, insbesondere mit einer gemeinsamen Schweißnaht V oder mit unterschiedlichen Schweißnähten V, elektrisch leitend mit einem oder mehreren Kollektoren 121 verbunden werden. Diese Form der Verbindung eines Kollektors 121, 122 kann analog auch für die Kathodenableiter 22 eingesetzt werden, welche der Übersicht halber nicht dargestellt sind.

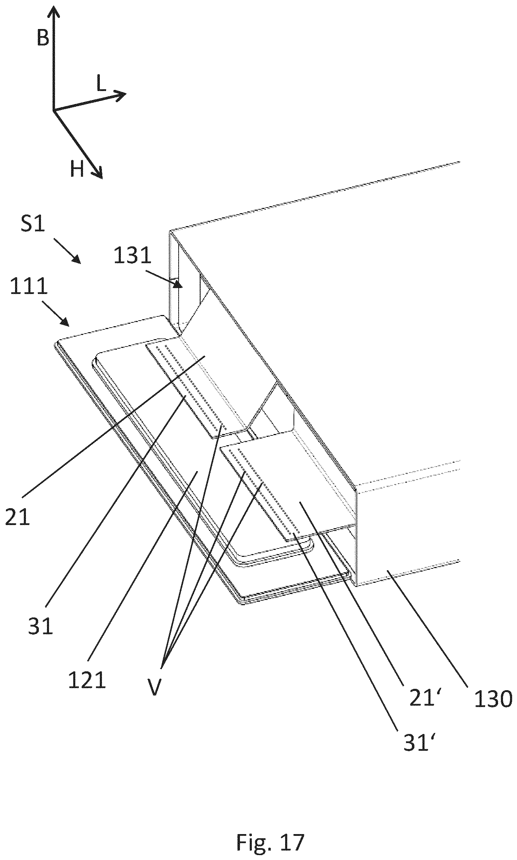

In der Fig. 17 ist eine Detailansicht auf eine einseitig geöffnete Batteriezelle 100 im Bereich der Anodenableiter 21, 21' zum Veranschaulichen eines Verfahrens gemäß einer fünften Ausführungsform der Erfindung illustriert. Diese Ausführungsform veranschaulicht insbesondere eine Querschnittsform der Anodenableiter 21, 21', welche sich von der Querschnittsform der Anodenfolien 11 und Kathodenfolien 12 im Elektrodenpaket 14, 15 unterscheiden kann. Im gezeigten Ausführungsbeispiel ragen die Anodenableiter 21, 21' in Längenrichtung L über die Ausdehnung der Elektrodenpakete 14, 15 hinaus, jedoch weisen die Anodenableiter 21, 21' in Höhenrichtung H eine Ausdehnung aus, welche im Wesentlichen einer halben Ausdehnung der Elektrodenpakete 14, 15 in Höhenrichtung H entspricht. Hierdurch können die endseitigen Verbindungsabschnitte 31, 31' der Anodenableiter 21, 21' in Höhenrichtung H nebeneinander auf dem ersten Kollektor 121 platziert und mit einer oder mehreren Schweißverbindungen V elektrisch leitend mit dem ersten Kollektor 121 verbunden werden. Diese Maßnahme ermöglicht beispielsweise mit einem Maschinendurchgang beide endseitigen Verbindungsabschnitte 31, 31` der Anodenableiter 21, 21' gleichzeitig zu verschweißen.

Analog zum Verfahren gemäß der dritten Ausführungsform, welches in Fig. 15A und Fig. 15B gezeigt ist, werden bei dieser Ausgestaltung die endseitigen Verbindungsabschnitte 31, 31' der Anodenableiter 21, 21' parallel nebeneinander, insbesondere entlang der Höhenrichtung H zueinander versetzt, mit dem gemeinsamen, ersten Kollektor 121 elektrisch leitend verbunden.

Die jeweiligen Seiten S1, S2 bzw. Anodenableiter 21 und Kathodenableiter 22 können bei allen Verfahrensschritten auch vertauscht werden. Somit können beispielsweise die für die Kathodenableiter 22 angewandten Schritte alternativ oder zusätzlich auch für die Anodenableiter 21 angewandt werden.

## Patentansprüche

1. Elektrodenanordnung (10), insbesondere für eine Batteriezelle (100), aufweisend mindestens ein Elektrodenpaket (14, 15) mit einer Vielzahl von Anodenfolien (11) und Kathodenfolien (12), welche durch Separatorfolien (13) voneinander getrennt sind, wobei die Anodenfolien (11) endseitig Anodenableiter (21) und die Kathodenfolien (12) endseitig Kathodenableiter (22) aufweisen, welche entlang einer Längenrichtung (L) an gegenüberliegenden Seiten (S1, S2) des Elektrodenpakets (14) hinausragen, wobei die Anodenableiter (21) an einer ersten Seite (S1) hinausragen und an mindestens zwei durch mindestens einen Biegeabschnitt (33) voneinander beabstandeten Verbindungsabschnitten (31) miteinander verbunden sind und/oder wobei die Kathodenableiter (22) an einer zweiten Seite (S2) des Elektrodenpakets (14) hinausragen und an mindestens zwei durch mindestens einen Biegeabschnitt (34) voneinander beabstandeten Verbindungsabschnitten (32) miteinander verbunden sind.

2. Elektrodenanordnung nach Anspruch 1, wobei die Anodenableiter (21) und/oder Kathodenableiter (22) an mindestens einem Biegeabschnitt (33, 34) entlang mindestens einer Raumrichtung (B, H) quer zur Längenrichtung (L) elastisch biegbar und/oder plastisch faltbar sind, wobei alle oder zumindest ein Teil aller Anodenableiter (21) und/oder Kathodenableiter (22) an mindestens einem zum Biegeabschnitt (33, 34) benachbart angeordneten Verbindungsabschnitt (31, 32) stoffschlüssig miteinander verbunden sind.

3. Elektrodenanordnung nach Anspruch 1 oder 2, wobei der mindestens eine Verbindungsabschnitt (31, 32) gerade oder entlang zumindest einer Raumrichtung (B, H, L) verformt ausgestaltet ist.

4. Elektrodenanordnung nach Anspruch 3, wobei der Verbindungsabschnitt (31, 32) in einem Winkel quer zur Längenrichtung (L) verformt, insbesondere gebogen oder geknickt, ausgestaltet ist.

5. Elektrodenanordnung nach einem der Ansprüche 1 bis 4, wobei die Anodenableiter (21) und/oder Kathodenableiter (22) entlang einer Breitenrichtung (B) randseitig oder mittig zusammengefasst und durch einen Verbindungsabschnitt (31, 32) bereichsweise miteinander verbunden sind.

6. Elektrodenanordnung nach einem der Ansprüche 1 bis 5, wobei entlang des mindestens einen Biegeabschnitts (33, 34) die Anodenableiter (21) und/oder Kathodenableiter (22) in Form von voneinander unabhängig beweglichen Einzellagen ausgestaltet sind.

7. Elektrodenanordnung nach einem der Ansprüche 1 bis 6, wobei die als Einzellagen ausgestalteten Anodenableiter (21) und/oder Kathodenableiter (22) des mindestens einen Biegeabschnitts (33, 34) eine gleiche oder voneinander unterschiedliche Länge aufweisen.

8. Elektrodenanordnung nach einem der Ansprüche 1 bis 7, wobei die als Einzellagen ausgestalteten Anodenableiter (21) und/oder Kathodenableiter (22) entlang des Biegeabschnitts (33, 34) einfach oder mehrfach biegbar und/oder verformbar sind.

9. Elektrodenanordnung nach Anspruch 8, wobei die als Einzellagen ausgestalteten Anodenableiter (21) und/oder Kathodenableiter (22) entlang von mindestens zwei zueinander benachbart angeordneten Biegeabschnitten (33, 33') in gegensätzliche Richtungen, insbesondere S-förmig oder Z-förmig, gebogen und/oder verformt sind.

10. Elektrodenanordnung nach Anspruch 9, wobei die als Einzellagen ausgestalteten Anodenableiter (21) und/oder Kathodenableiter (22) entlang des Biegeabschnitts (31, 31') derartig in gegensätzliche Richtungen gebogen sind, dass aufgrund von einer Biegung (31) resultierende Bogenlängenänderungen von Einzellagen sich durch mindestens eine zweite Biegung (31') ausgleichen.

11. Elektrodenanordnung nach einem der Ansprüche 1 bis 10, wobei die Anodenableiter (21) und/oder Kathodenableiter (22) endseitig durch einen Verbindungsabschnitt (31, 32) miteinander verbunden sind, welcher dazu eingerichtet ist, die Anodenableiter (21) und/oder Kathodenableiter (22) mit einem Kollektor (121, 122) elektrisch leitend zu koppeln.

12. Batteriezelle (100), aufweisend ein Zellgehäuse (130), welches an mindestens einer Seite (S1) durch einen Zelldeckel (111) verschlossen ist, wobei der Zelldeckel (111) mindestens einen innenseitig angeordneten Kollektor (121) und mindestens ein außenseitig angeordnetes Terminal (101) aufweist, welche durch den Zelldeckel (111) hindurch elektrisch leitend miteinander verbunden sind, wobei die Batteriezelle (100) mindestens eine im Zellgehäuse (130) angeordnete Elektrodenanordnung (10) gemäß einem der vorhergehenden Ansprüche aufweist, wobei Anodenableiter (21) und/oder Kathodenableiter (22) der mindestens einen Elektrodenanordnung (10) elektrisch leitend mit zumindest einem Kollektor (121) des mindestens einen Zelldeckels (111) verbunden sind.

13. Batteriezelle nach Anspruch 12, wobei mindestens zwei entlang einer Breitenrichtung (B) parallel nebeneinander angeordnete Elektrodenanordnungen (10, 10') im Zellgehäuse (130) angeordnet sind, wobei zumindest ein erster endseitiger Verbindungsabschnitt (31) einer ersten Elektrodenanordnung (10) und zumindest ein zweiter endseitiger Verbindungsabschnitt (31') einer zweiten Elektrodenanordnung (10') parallel nebeneinander oder einander überlappend mit mindestens einem Kollektor (121) elektrisch leitend verbunden sind.

14. Verfahren zum Herstellen von Batteriezellen (100) mit zumindest zwei an gegenüberliegenden Seiten (S1, S2) angeordneten Terminalplatten (101, 102), wobei
- mindestens eine Elektrodenanordnung (10) mit einer Vielzahl von Anodenfolien (11) und Kathodenfolien (12), welche durch Separatorfolien (13) voneinander getrennt sind, bereitgestellt wird, wobei die Anodenfolien (11) endseitig Anodenableiter (21) und die Kathodenfolien (12) endseitig Kathodenableiter (22) aufweisen, wobei die Anodenableiter (21) der Anodenfolien (11) an einer ersten Seite (S1) und die Kathodenableiter (22) der Kathodenfolien (12) an einer zweiten Seite (S2) eines Elektrodenpakets (14) der Elektrodenanordnung (10) entlang einer Längenrichtung (L) hinausragen,
- die Anodenableiter (21) und/oder Kathodenableiter (22) bereichsweise unter Ausbildung von mindestens einem Verbindungsabschnitt (31, 32) miteinander verbunden werden,
- die mindestens eine Elektrodenanordnung (10) in ein Zellgehäuse (130) hineingesetzt wird,
- die Anodenableiter (21) direkt oder über einen endseitig ausgebildeten Verbindungsabschnitt (31) mit einem Kollektor (121) eines ersten Zelldeckels (111) und die Kathodenableiter (22) direkt oder über einen endseitig ausgebildeten Verbindungsabschnitt (32) mit einem Kollektor (122) eines zweiten Zelldeckels (112) elektrisch leitend verbunden werden,
- das Zellgehäuse (130) durch den ersten Zelldeckel (111) und den zweiten Zelldeckel (112) verschlossen wird, wobei die Anodenableiter (21) und/oder Kathodenableiter (22) entlang mindestens eines Biegeabschnitts (33, 34), insbesondere an welchem die als Einzellagen vorliegenden Anodenableiter (21) und/oder Kathodenableiter (22) nicht miteinander verbunden sind, gebogen werden.
